# EUROPEAN PATENT SPECIFICATION

(11) **EP 3 033 663 B1**
(45) Date of publication and mention of the grant of the patent: **28.10.2020**
(21) Application number: 14836038.1
(22) Date of filing: 12.08.2014
(51) Int. Cl.: G06F 3/048, G06F 3/041

(54) **PRESSURE SENSING INTERFACE FOR VEHICLE INTERIOR**
DRUCKMESSUNGSSCHNITTSTELLE FÜR FAHRZEUGINNENRAUM
INTERFACE DE DÉTECTION DE PRESSION POUR L'INTÉRIEUR D'UN VÉHICULE

(30) Priority: 12.08.2013 US 201361865001 P; 13.08.2013 US 201361865450 P
(43) Date of publication of application: 22.06.2016
(73) Proprietor: Johnson Controls Technology Company, Milwaukee, WI 53209 (US)
(72) Inventor: SINGH, Ankit, Seattle, WA 98122 (US); ORTIZ, Mario J. Enriquez, Holland, MI 49424 (US); KRING, Christopher, Zeeland, MI 49464 (US)
(74) Representative: Trinks, Ole
(86) International application number: PCT/US2014/050718
(87) International publication number: WO 2015/023668

(56) References cited:
- EP-B1- 2 305 508
- WO-A1-2012/147948
- WO-A1-2013/088559
- JP-A- 2002 048 658
- US-A1- 2005 165 526
- US-A1- 2010 095 245
- US-A1- 2011 001 722
- US-B1- 6 571 511

## Description

### BACKGROUND

The present invention relates to vehicle interiors. More particularly, the invention relates to a user interface within a vehicle.

Conventional automotive interiors include numerous switches, buttons, dials, and other physical control elements for receiving inputs from an occupant. These control elements are coupled to corresponding features and systems including entertainment systems, information systems, climate controls, door locks, window regulators, seat position adjusters, cruise control, mirror position adjusters, headlights, steering wheel adjusters, and the like. Thus, the typical vehicle interior requires a great number of pieces of hardware to enable the driver or occupant to control all the various functions of the vehicle. Not only is component cost made high, but interior trim panels must be designed to accommodate all of the required control components, and a significant percentage of assembly time may be occupied by associating all of the required control components with the corresponding trim panels.

JP2002048658 A discloses a pressure-sensitive sensor for a vehicle seat comprising a plurality of upper electrodes and lower electrodes arranged in parallel on a plane, which are opposed to each other with a pressure-sensitive rubber interposed therebetween so as to intersect each other at a right angle. The pressure-sensitive sensor is provided inside a backrest portion or a seating portion of a vehicle seat. WO2013/088559 A1 relates to an operation device including a touch operation unit that has an operation surface, and a control device that response to a selection operation performed on each of selection items displayed on a display device arranged remotely from the touch operation unit.

WO2012/147948 A1 discloses an input device comprising a thick upper transparent electrode base member provided on a first surface with an upper transparent electrode group, a lower transparent electrode base member provided on a first surface with a lower transparent electrode group, and a transparent pressure sensitive conductive layer formed on a region between the upper and the lower transparent electrode base member.

### SUMMARY

The invention encompasses a user interface system for a vehicle interior comprising the features of independent claim 1.

The overlying layers include first and second non-conductive layers and a conductive material that is interposed between the first and second non-conductive layers and which exhibits a variable resistance in response to pressure or strain. The conductive material may be foam with a conductive additive, or alternately, semi-conductive gelatin.

Each of the first and second non-conductive layers include a plurality of conductive strips affixed thereto, with the plurality of conductive strips on the first non-conductive layer all running in a common first direction orthogonal to a second direction in which the plurality of conductive strips on the second non-conductive layer run.

### BRIEF DESCRIPTION OF THE DRAWINGS

Fig. 1 is a partial assembly view of a vehicle trim panel including a pressure sensing interface according to one aspect of the invention.
Fig. 2 illustrates a conductive intermediate layer laid over an interior surface of a cover layer of the trim panel of Fig. 1.
Fig. 3 is a perspective view of the trim panel of Fig. 1, illustrating an exterior surface of the cover layer.
Fig. 4 is a bottom view of the trim panel of Fig. 1.
Fig. 5 is a view of another vehicle trim panel having an alternate configuration of conductive strips.

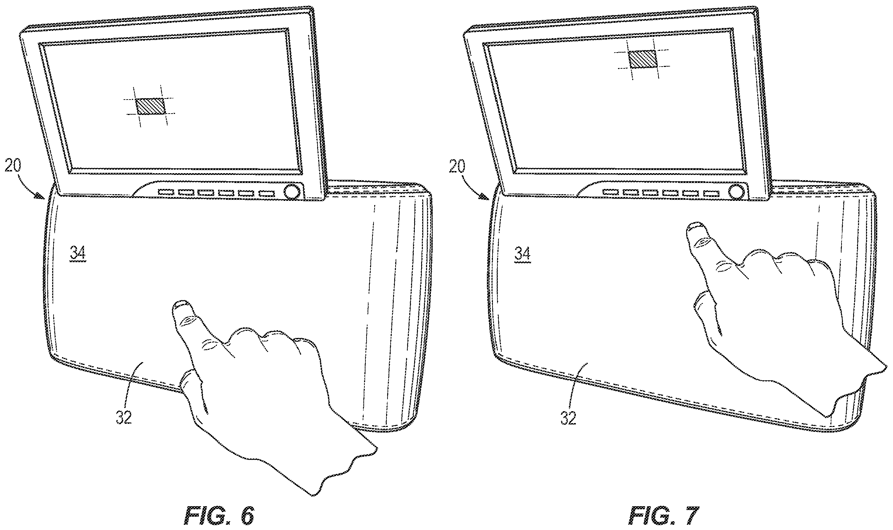

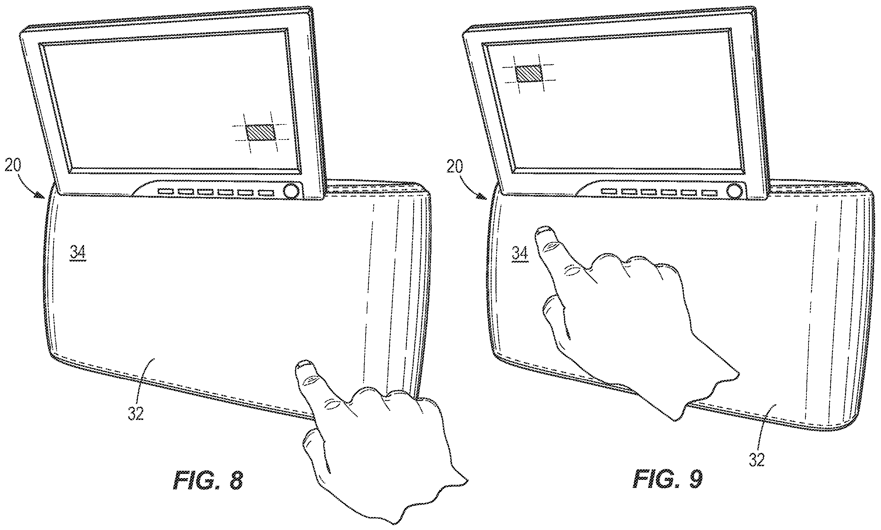

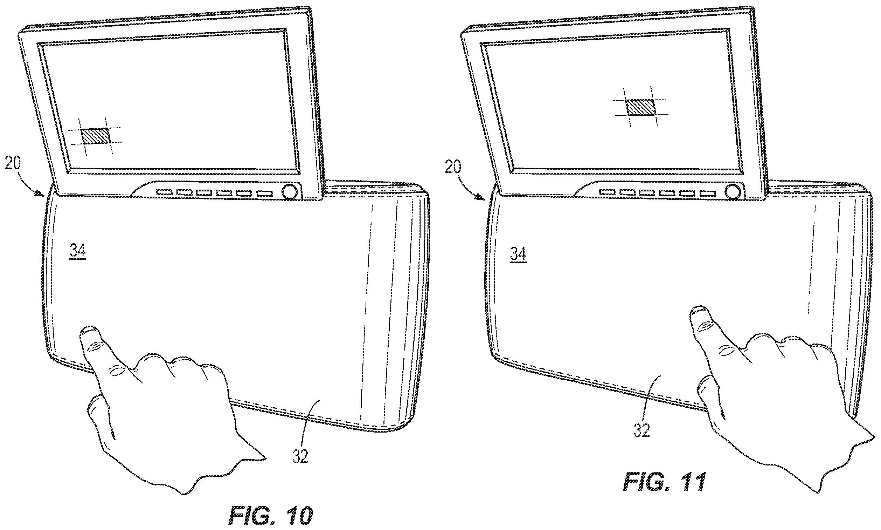

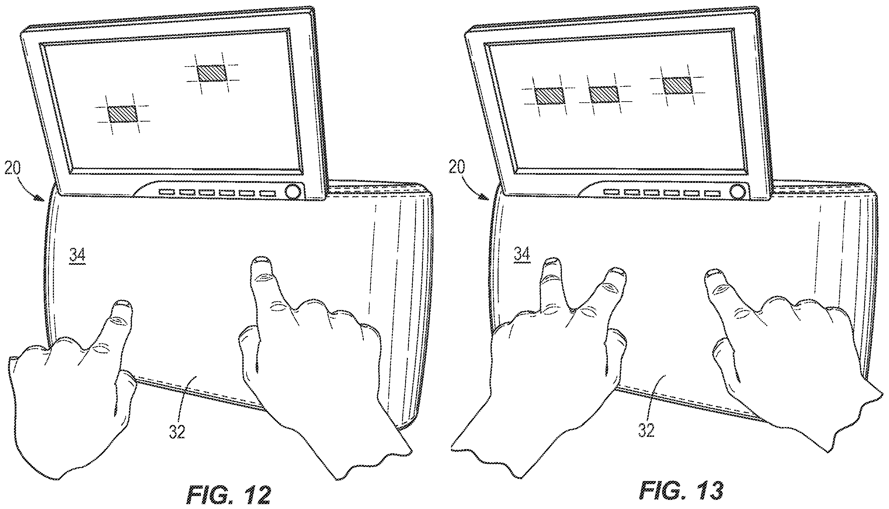

Figs. 6-14 illustrate operation of the pressure sensing interface of the trim panel of Fig. 1.
Fig. 15 is a plan view of another alternate conductive strip configuration.
Fig. 16 is an exploded assembly view of a pressure sensing interface utilizing the conductive strip configuration of Fig. 15.
Fig. 17 is an electrical schematic of a pressure sensing interface according to one aspect of the invention.
Fig. 18 illustrates a control system for a vehicle including a pressure sensing interface.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways and is defined by the appended set of claims.

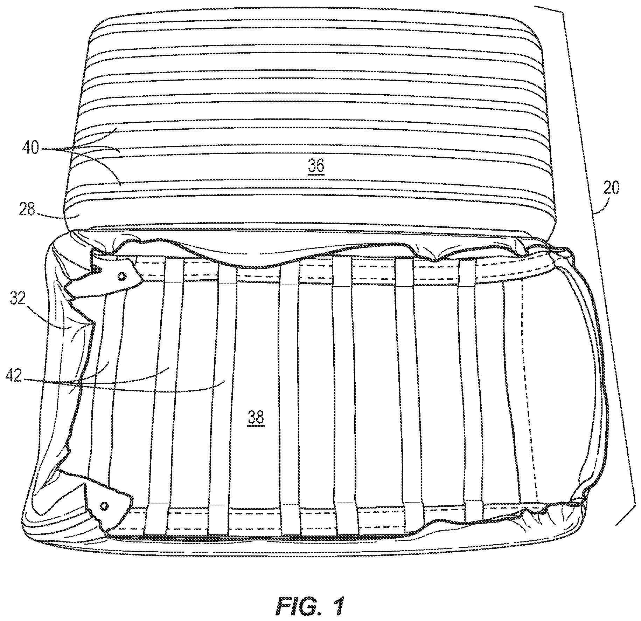

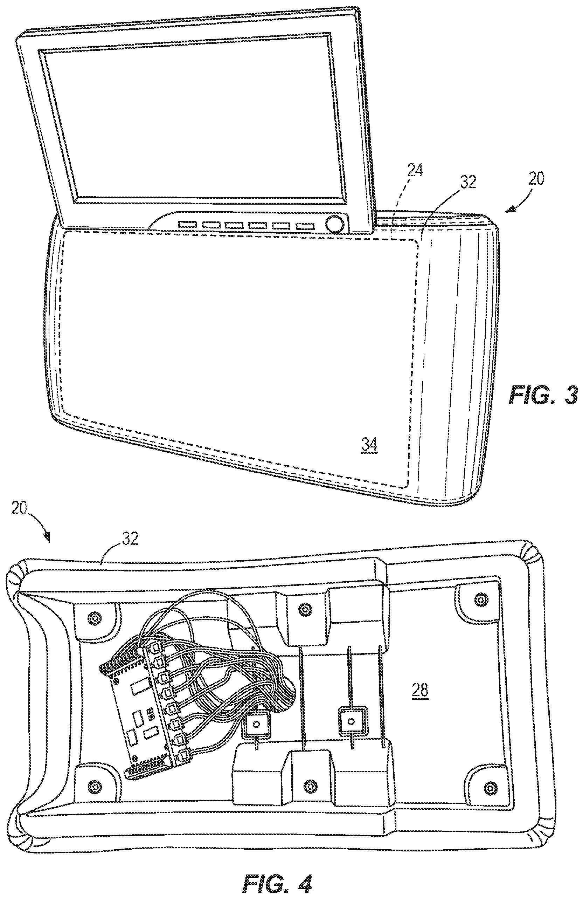

Fig. 1 illustrates an interior component or trim panel 20 for mounting within a vehicle (not shown). In the illustrated construction, the trim panel 20 is an armrest for placement adjacent one or more seats within the vehicle. However, the trim panel 20 may take alternate forms in other constructions. The trim panel 20 is provided with an integral pressure sensing interface 24 (Fig. 3) as described in further detail below.

The trim panel 20 includes a base 28 and a cover layer or covering 32. The covering 32 may cover all or portions of the base 28 when assembled. The base 28 may define the shape of the trim panel 20 and provide all or a substantial majority of the rigidity of the trim panel 20, while the covering 32 has an exterior surface 34 that defines all or most of the exposed surface of the trim panel 20 (i.e., exposed to the vehicle cabin and occupants). The covering 32 may be form-fitting over the base 28 as shown in Fig. 3. Both the base 28 and the covering 32 can be constructed from materials that are not electrically conductive. For example, the base 28 may be constructed of hard plastic and the covering 32 may be constructed of leather, vinyl, or textile fabric. Contrary to the typical display screens which are used as vehicle control panels, the pressure sensing interface 24 can provide an exterior contact surface or material which is non-translucent and flexible due to the covering 32.

As shown in Fig. 1, the co-facing surfaces of the base 28 and the covering 32 (i.e., a cover-facing surface 36 of the base 28 and a base-facing surface 38 of the covering 32) are each provided with a plurality of conductive strips 40, 42. The conductive strips 42 on the covering 32 are flexible along with the covering 32 in response to light to moderate manual pressure from a human hand. The conductive strips 40, 42 can be constructed of metal foil adhesively bonded to the underlying substrate (i.e., base 28 or covering 32). However, the conductive strips 40, 42 can be provided as printed conductive strips, such as screen printed conductive ink strips. The conductive strips 40 provided on the base 28 are arranged side-by-side, all extending parallel to each other in a first direction (e.g., a longitudinal direction of the armrest 20). The conductive strips 42 provided on the covering 32 are arranged side-by-side, all extending parallel to each other in a second direction (e.g., a transverse direction of the armrest 20). The two sets of conductive strips 40, 42 can extend substantially perpendicular to each other to define a matrix or lattice when stacked together. The lattice defines a pixel resolution that is equal to the number of conductive strips 40 on the base 28 times the number of conductive strips 42 on the covering 32. In some constructions, the pixel resolution can be increased by increasing the number of conductive strips in the two sets of conductive strips 40, 42. Additionally or alternatively, interpolation can be implemented to identify portions of the trim panel 20 between the conductive strips 40, 42 to which pressure is being applied based on pressures detected using adjacent conductive strips 40, 42. A combination of increasing the number of conductive strips and interpolation can be implemented in some constructions to increase or maximize pixel resolution. It should also be noted that the conductive strips 40, 42 can be provided adjacent the cover-facing surface 36 of the base 28 and the base-facing surface 38 of the covering 32, rather than directly thereon. For example, each set of conductive strips 40, 42 can be provided on a separate film layer.

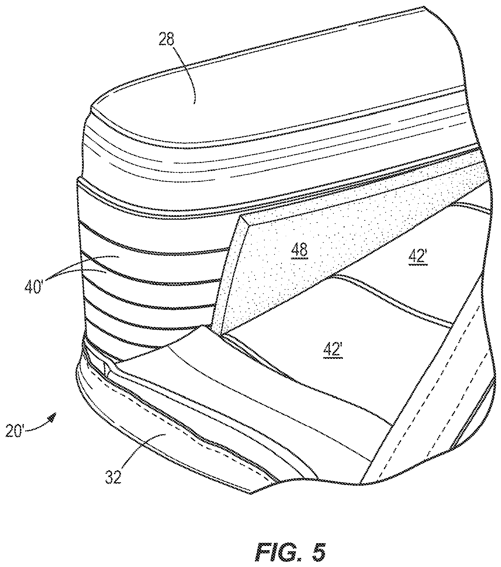

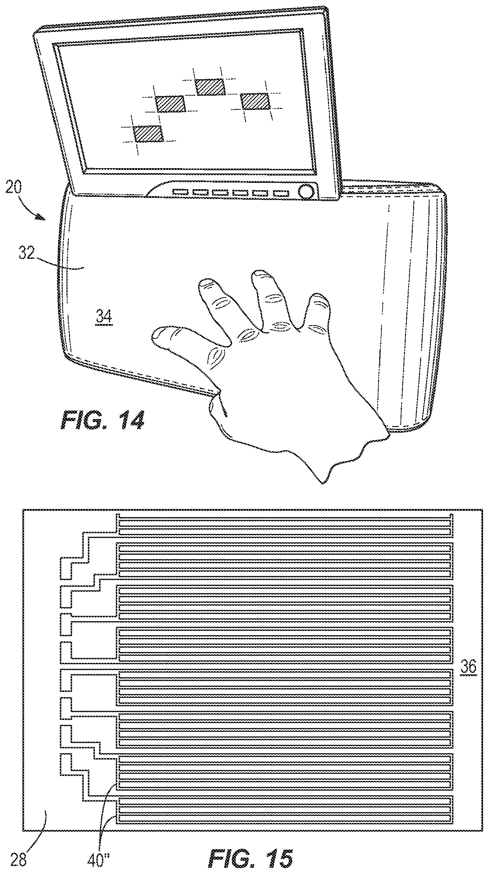

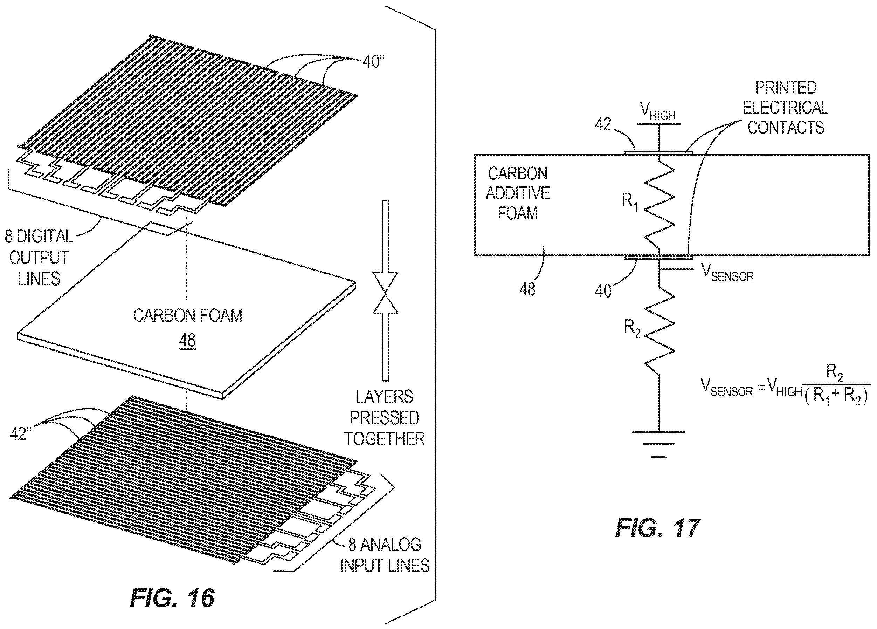

Fig. 5 illustrates a trim panel 20' similar to the trim panel 20 of Figs. 1-4, but having conductive strips 40', 42' according to an alternate construction. Whereas the conductive strips 40, 42 as shown in Fig. 1 cover half or less of the area of the respective surfaces 36, 38, the conductive strips 40', 42' of Fig. 5 cover substantially the entire surfaces 36, 38, with only minimal spacing between each adjacent strip. Thus, it should be clear that the width of the conductive strips and the spacing therebetween may be varied as desired or as necessary for particular application-specific outcomes. Fig. 15 illustrates a set of conductive strips 40" according to yet another construction. In Fig. 15, each individual (electrically isolated) conductive strip 40" is provided as a plurality of printed circuit of interconnected strips with spaces therebetween. This provides the functionality of a larger strip width without excessive material usage. This construction is likewise applied to the conductive strips 42" in the exploded assembly view of Fig. 16.

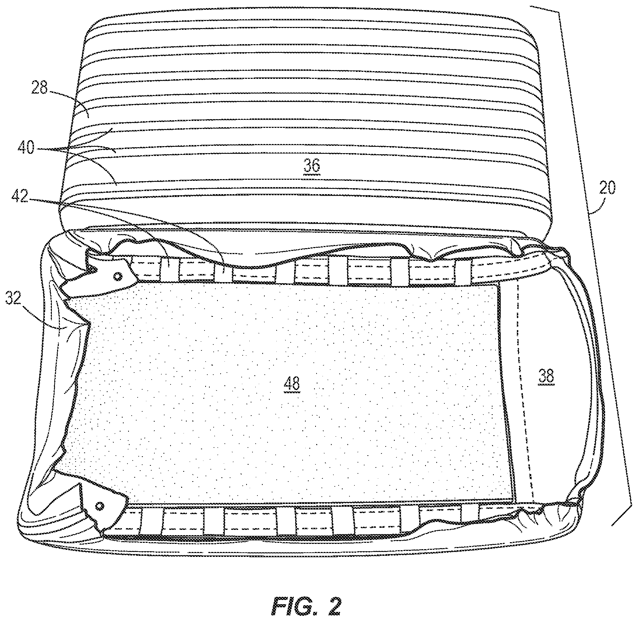

Referring back to the initial construction shown in Fig. 2, an intermediate layer 48 is positioned between the base 28 and the covering 32 to separate the two sets of conductive strips 40, 42 when the covering 32 is installed over the base 28. The intermediate layer 48 can be constructed of a resilient compressible material, such as polyurethane foam for example. The intermediate layer 48 provides a compressible gap whereby a positive displacement distance between the co-facing surfaces 36, 38 is nominally maintained at a maximum value and can be reduced to a minimum value approaching zero when the intermediate layer 48 is fully compressed. For reasons described in further detail below, the intermediate layer 48 can have compression-responsive electrical resistance based on a variable electrical resistivity (or reciprocally, electrical conductivity). For example, the intermediate layer 48 can display a nominal amount of electrical resistance between the two sets of conductive strips 40, 42 when in the natural, uncompressed state and can display decreasing amounts of electrical resistance (i.e., as a product of increased conductivity) as compressed. The electrical resistance of the intermediate layer 48 varies on a localized basis, only where compressed. In one construction, the compression-responsive electrical resistance of the intermediate layer 48 is imparted by conductive particles interspersed within a non-conductive compressible substrate. For example, carbon "dust" (i.e., carbon black particles) may be interspersed within polyurethane foam. In one particular construction, the intermediate layer 48 contains about 50 percent by weight carbon black particles.

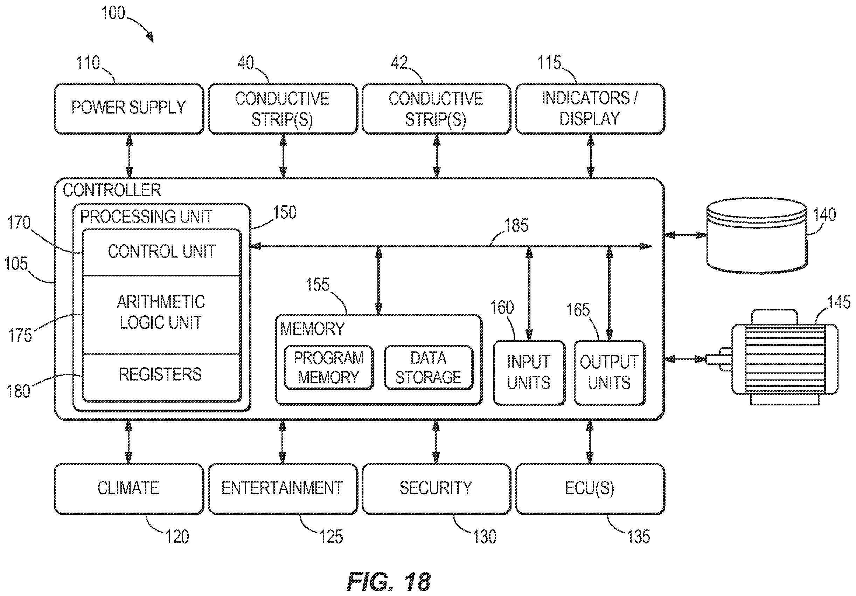

The assembly of the two sets of conductive strips 40, 42 and the intermediate layer 48 make up a sensor grid. The interface 24 is defined as the area of the covering 32 in which the sensor grid is positioned. One set of conductive strips 40, 42 is defined as the input end of the sensor grid and the other set of conductive strips 40, 42 is defined as the output end of the sensor grid. With reference to the schematic of Fig. 17, an input voltage V_{high} is applied to each of the conductive strips of the input end (e.g., conductive strips 42). Each conductive strip of the output end (e.g., conductive strips 40) is monitored or scanned to detect changes in the resistance R₁ of the intermediate layer 48 that are indicative of compression of the covering 32 and the intermediate layer 48 toward the base 28. The manner in which voltages are applied to the conductive strips 40, 42 and the manner in which the conductive strips 40, 42 are monitored or scanned are each described in greater detail below. A sensed voltage Vₛₑₙₛₒᵣ is monitored at each conductive strip 40 at the output end. In the illustrated construction, a fixed resistance R₂ is placed between the location of sensed voltage Vₛₑₙₛₒᵣ and ground. As described in greater detail below, a controller 105 (Fig. 18) is operable to detect changes in resistance R₁ by monitoring Vₛₑₙₛₒᵣ to identify when pressure is applied to the interface 24, the location of the applied pressure within the interface 24, and the relative amount of the pressure being applied. As the pressure applied to the intermediate layer 48 is increased, the sensed voltage Vₛₑₙₛₒᵣ also increases as the resistance R₁ decreases.

Fig. 18 illustrates a control system 100 associated with a vehicle and the trim panel 20. The system 100 includes a controller 105 that is electrically and/or communicatively connected to a variety of modules, components, or electronic control units ("ECUs") associated with the vehicle. For example, the illustrated controller 105 is connected to the conductive strips 40, the conductive strips 42, a power supply module 110, one or more indicators/displays 115, a climate control module 120, and entertainment control module 125, a security control module 130, one or more additional or different ECUs 135 associated with the vehicle, a data store or database 140, and a motor 145. The controller 105 includes combinations of hardware and software that are operable to, among other things, control the operation of the various control modules 120-135, access data from or store data in the data store 140, control the operation of the motor 145, activate the one or more indicators/displays 115, etc. As illustrated in Fig. 18, in some constructions, the controller 105 is connected to, for example, the data store 140 or the motor 145 to directly control the operation or performance of the data store 140 or motor 145. In other constructions, the controller 105 is connected to an intermediate control module or control unit 120-135 which, in turn, provides control signals to components or modules associated with the vehicle.

In some embodiments, the controller 105 includes a plurality of electrical and electronic components that provide power, operational control, and protection to the components and modules within or connected to the controller 105 and/or associated with the vehicle. For example, the controller 105 includes, among other things, a processing unit 150 (e.g., a microprocessor, a microcontroller, or another suitable programmable device), a memory 155, input units 160, and output units 165. The processing unit 150 includes, among other things, a control unit 170, an arithmetic logic unit ("ALU") 175, and a plurality of registers 180 (shown as a group of registers in Fig. 18), and is implemented using a known computer architecture, such as a modified Harvard architecture, a von Neumann architecture, etc. The processing unit 150, the memory 155, the input units 160, and the output units 165, as well as the various modules connected to the controller 105 are connected by one or more control and/or data buses (e.g., common bus 185). The control and/or data buses are shown generally in Fig. 18 for illustrative purposes. The use of one or more control and/or data buses for the interconnection between and communication among the various modules and components would be known to a person skilled in the art in view of the invention described herein. In some embodiments, the controller 105 is implemented partially or entirely on a semiconductor (e.g., a field-programmable gate array ["FPGA"] semiconductor) chip, such as a chip developed through a register transfer level ("RTL") design process.

The memory 155 includes, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The processing unit 150 is connected to the memory 155 and executes software instructions that are capable of being stored in a RAM of the memory 155 (e.g., during execution), a ROM of the memory 155 (e.g., on a generally permanent basis), or another non-transitory computer readable medium such as another memory or a disc. Software included in the implementation of the system 100 can be stored in the memory 155 of the controller 105. The software includes, for example, firmware, one or more applications, program data, filters, rules, one or more program modules, and other executable instructions. The controller 105 is configured to retrieve from memory and execute, among other things, instructions related to the control methods described herein. In other constructions, the controller 105 includes additional, fewer, or different components.

The power supply module 110 supplies a voltage to the controller 105 or other components or modules of the system 100. The power supply module 110 is, for example, a 12V vehicle battery (e.g., a 12V lead acid battery) or a grid-independent power source (e.g., a generator, a solar panel, etc.).

The indicators/display 115 includes, for example, a liquid crystal display ("LCD"), a light-emitting diode ("LED") display, an organic LED ("OLED") display, a thin-film transistor ("TFT") LCD, LEDs, speakers, motors, etc., to provide visual, auditory, tactile, or haptic indications of the status or conditions of the system 100, etc. The indicators/display 115 can be configured to display conditions or data associated with the system 100 in real-time or substantially real-time. For example, the indicators/display are configured to display measured operational characteristics or settings of the vehicle, the status of the vehicle, climate settings, entertainment settings, security settings/status, etc.

In some constructions, the input units 160 and output units 165 correspond at least to the number of inputs and outputs for the desired pixel resolution of the trim panel 20 (e.g., the number of conductive strips in the first and second sets of conductive strips 40, 42). The controller 105 is configured to monitor the input units 160 and provide output voltages to the output units 165 when performing the pressure sensing described above. In some embodiments, the controller 105 performs a calibration or initialization to determine baseline voltage values at each of the input units 160. For example, when initialized, the controller 105 sequentially reads voltages at the input units 160 from the conductive strips 42. The sensed or monitored voltage values are stored in the memory 155 as baseline values. The baseline input voltage values are then used to determine when pressure is being applied to the trim panel 20, as described above with respect to Fig. 17.

During operation, the controller selectively outputs voltages using the output units 165 to one or more of the conductive strips 40. In some embodiments, the controller 105 provides an output voltage to one of the conductive strips 40. In other embodiments, the controller 105 provides outputs voltages to a plurality of the conductive strips 40 or each of the conductive strips 40. Embodiments of the invention described below are described with respect to the controller 105 providing an output voltage to one of the conductive strips 40. When the controller 105 is providing the output to the conductive strip 40, the controller selectively (e.g., sequentially, in parallel, etc.) monitors the input units from the conductive strips 42. In some embodiments, such a scanning technique is performed at a rate of greater than approximately 30Hz. Additionally or alternatively, the scanning rate can vary (e.g., be greater than 30Hz or less than 30Hz) depending on, for example, the type of parameter being controlled (e.g., climate, entertainment, security, etc.).

If, based on a comparison of the baseline voltage value to the monitored voltage value from the conductive strips 42, a change in voltage greater than a threshold value is detected (e.g., 0.1 Volts, 0.01 Volts, 1% of voltage range, 5% of voltage range, 10% of voltage range, etc.), the controller 105 determines that pressure has been applied to the trim panel 20. The location of the pressure is identified based on the output unit 165 to which an output voltage was applied and the input unit 160 on which the change in voltage was detected. In some embodiments, the corresponding input unit(s) 160 and output unit 165 correspond to coordinates within a look-up table ("LUT") which the controller 105 uses to identify the pixels of the trim panel 20 being pressed. In some embodiments, the controller 105 generates a map or matrix of voltage changes for each pixel of the trim panel 20. The mapping of voltage changes is then used to identify points of pressure on the trim panel 20.

In addition, the amount of voltage change detected (i.e., from the baseline) can correspond to different degrees of pressure being applied to the trim panel 20. For example, a relationship between the pressure applied to the trim panel and a corresponding change in voltage detected by the controller 105 can be linear, nonlinear, exponential, etc. In some embodiments, the controller 105 can modify (e.g., increase or decrease) sensitivities to applied pressure based on the driver, the type of parameter being controlled (e.g., climate, entertainment, security, etc.), etc. Using a LUT or an algorithm stored in, for example, the memory 155, the controller can associate a detected change in voltage with an amount of applied pressure. Measuring variable pressure enables the interface 24 (or the controller 105 coupled with the interface) to distinguish between different types of touching (e.g., brushing, light touch, hard touch) which can enable pressure sensitive control actions coupled to the interface 24. In other words, a parameter of the controlled element (e.g., speed or amount of change) may be dependent on the amount of pressure sensed. For example, the greater the pressure applied to the trim panel 20, the faster the parameter is changed.

Visual, auditory, tactile, or haptic feedback may be provided to the user to mimic the feel of a physical switch or button which signals to the user that they have successfully actuated a particular control function. For example, a vibration generator may be coupled to the trim panel 20 and responsive to vibrate the interface 24 upon the controller 105 determining that a pressure in excess of one or more threshold actuation pressures has been applied to the interface 24.

The pressure sensing interface 24 can be coupled with one or more vehicle systems (e.g., modules 120-135, motor 145, data store 140, etc.) to provide user control to one or more on-off states or other adjustable parameters. For example and without limitation, the pressure sensing interface 24 can be coupled through the controller 105 and/or control modules 120-135 to an entertainment system (e.g., radio, DVD movie player, etc.), an information system (e.g., navigation, back-up camera, trip computer, etc.), climate controls (e.g., temperature, fan speed, air conditioning, vent control), door locks, window regulators, seat position adjusters, cruise control, mirror position adjusters, headlights, and/or a steering wheel adjuster.

The interface 24, and more particularly the covering 32, is provided with indicia identifying certain areas of the interface 24 that are associated with certain vehicle controls via the controller. The indicia may take many various forms including but not limited to embossing, screen printing, bonded decals, and stitching.

Although illustrated herein as an armrest, the trim panel 20 having the integral pressure sensing interface 24 can take the form of virtually any other interior vehicle component as desired. For example, the pressure sensing interface 24 can be constructed as part of a headliner, dashboard, center console, door panel, steering wheel, seat, floor, roof pillar trim, etc. Although the pressure sensing interface 24 can be connected to an indicator or display (e.g., a digital display screen), the pressure sensing interface 24 itself does not form a display screen. Rather, the pressure sensing interface 24 is built into existing, non-display portions of a vehicle interior. Thus, a component of interior trim not conventionally used as a vehicle control user interface can be adapted to provide such function to enhance the user experience of a conventional automobile.

## Claims

1. A user interface system for a vehicle interior, said user interface system being adapted to receive touch-based inputs for controlling one or more vehicle systems or components and comprising:
- a contact surface;
- first and second non-conductive layers;
- a layer (48) between the first and second non-conductive layers;
- a sensor grid comprising a first set of conductive strips (40) between the first non-conductive layer and the layer (48), and a second set of conductive strips (42) between the second non-conductive layer and the layer (48);
- a controller (105);
wherein the sensor grid is configured to provide variable electrical resistance in response to applied pressure;
wherein the controller (105) is configured to detect the electrical resistance of the sensor grid by monitoring an electrical signal;
wherein the layer (48) between the first and second non-conductive layers is configured to provide variable electrical resistance in response to compression; and
wherein the contact surface comprises indicia identifying portions of the sensor grid associated with corresponding vehicle controls.

2. The user interface system of Claim 1 wherein the electrical signal comprises a voltage and wherein the layer (48) between the first and second non-conductive layers is configured for decreased electrical resistance as it is compressed by applied pressure.

3. The user interface system of Claim 1 or 2 wherein the first and second sets of conductive strips (40, 42) overlap.

4. The user interface system of Claim 3 wherein voltage is applied to the first set of conductive strips (40) and the controller (105) is configured to monitor the voltage at the second set of conductive strips (42) where the first and second sets of conductive strips (40, 42) overlap.

5. The user interface system of one of the Claims 1 to 4 configured for operation by a vehicle occupant wherein the controller (105) is further configured for at least one of (a) sending a signal to a control module, (b) controlling a motor, (c) providing a signal to a vehicle component, (d) providing electrical power to a vehicle component, (e) providing at least one of (1) visible feedback, (2) audible feedback, (3) tactile feedback, (4) haptic feedback to the vehicle occupant.

6. The user interface system of one of the Claims 1 to 5 wherein the controller (105) is further configured to send a control signal to at least one of (a) an indicator, (b) a display, (c) a climate control module, (d) an entertainment control module, (e) a security control module, (f) an engine control unit, (g) a data store, (h) a database, (i) a motor, (j) a vehicle seat, (k) a window regulator.

7. The user interface system of one of the Claims 1 to 6 wherein the controller (105) is configured to detect at least one of (a) the location of the input, (b) the intensity of the input.

8. The user interface system of one of the Claims 1 to 7 wherein the layer (48) between the first and second non-conductive layers comprises at least one of (a) a compressible material, (b) polyurethane foam, (c) conductive particles, (d) a non- conductive compressible substrate with a conductive additive, (e) carbon black particles interspersed within a non-conductive compressible substrate, (f) a semi-conductive gelatin.

9. The user interface system of one of the Claims 1 to 7 wherein the layer (48) between the first and second non-conductive layers comprises a compressible gap wherein the gap is configured to be reduced when the layer (48) is compressed by applied pressure.

10. The user interface system of one of the Claims 1 to 7 wherein the layer (48) between the first and second non-conductive layers is configured (a) to provide a nominal amount of electrical resistance between the first set of conductive strips (40) and the second set of conductive strips (42) when the layer (48) is in an uncompressed state and (b) to provide decreasing amounts of electrical resistance as the layer (48) is compressed.

11. A vehicle control system for receiving touch-based inputs for controlling one or more vehicle systems or components, the control system comprising a user interface system according to one of the Claims 1 to 10, wherein the controller (105) of the user interface system is operable to identify a user input on the contact surface by monitoring the electrical resistance between the first and second sets of conductive strips.

12. The vehicle control system of Claim 11, further comprising a vibration generator coupled to the interface and responsive to vibrate the interface upon the controller (105) determining that a pressure in excess of a threshold actuation pressure has been applied to the interface.

13. The vehicle control system of Claim 11 or 12 further comprising a vehicle control module coupled to the controller (105), the controller (105) being configured to send a control signal to the vehicle control module to control an on/off state or an adjustable parameter of a vehicle system controlled by the corresponding control module.

14. The vehicle control system of one of the Claims 11 to 13 wherein the pressure sensing interface is constructed as part of an armrest, a headliner, a dashboard, a center console, a door panel, a steering wheel, a seat, a floor, or a roof pillar trim.

## Patentansprüche

1. Benutzerschnittstellensystem für einen Fahrzeuginnenraum, wobei das Benutzerschnittstellensystem so ausgelegt ist, dass es berührungsbasierte Eingaben zur Steuerung eines oder mehrerer Fahrzeugsysteme oder
- komponenten empfangen kann, und aufweist:
- eine Kontaktfläche;
- eine erste und zweite nichtleitende Schicht;
- eine Schicht (48) zwischen der ersten und der zweiten nichtleitenden Schicht;
- ein Sensorgitter mit einem ersten Satz leitender Streifen (40) zwischen der ersten nichtleitenden Schicht und der Schicht (48) und einem zweiten Satz leitender Streifen (42) zwischen der zweiten nichtleitenden Schicht und der Schicht (48);
- eine Steuerung (105);
wobei das Sensorgitter so konfiguriert ist, dass es als Reaktion auf angelegten Druck einen variablen elektrischen Widerstand bereitstellt; wobei die Steuerung (105) so konfiguriert ist, dass sie den elektrischen Widerstand des Sensorgitters durch Überwachen eines elektrischen Signals erfasst;
wobei die Schicht (48) zwischen der ersten und der zweiten nichtleitenden Schicht so konfiguriert ist, dass sie als Reaktion auf Kompression einen variablen elektrischen Widerstand bereitstellt; und
wobei die Kontaktfläche Kennzeichen aufweist, die Bereiche des Sensorgitters bezeichnen, die mit entsprechenden Fahrzeugsteuerungen verbunden sind.

2. Benutzerschnittstellensystem nach Anspruch 1, bei dem das elektrische Signal eine Spannung aufweist und bei dem die Schicht (48) zwischen der ersten und der zweiten nichtleitenden Schicht zu einem verringerten elektrischen Widerstand ausgelegt ist, wenn sie durch angelegten Druck zusammengedrückt wird.

3. Benutzerschnittstellensystem nach Anspruch 1 oder 2, bei dem sich der erste und der zweite Satz leitender Streifen (40, 42) überlappen.

4. Benutzerschnittstellensystem nach Anspruch 3, bei dem Spannung an den ersten Satz leitender Streifen (40) angelegt wird und die Steuerung (105) so konfiguriert ist, dass sie die Spannung am zweiten Satz leitender Streifen (42), wo sich der erste und der zweite Satz leitender Streifen (40, 42) überlappen, überwacht.

5. Benutzerschnittstellensystem nach einem der Ansprüche 1 bis 4, das für den Betrieb durch einen Fahrzeuginsassen konfiguriert ist, wobei die Steuerung (105) ferner konfiguriert ist für mindestens eines von (a) Senden eines Signals an ein Steuermodul, (b) Steuern eines Motors, (c) Bereitstellen eines Signals an eine Fahrzeugkomponente, (d) Bereitstellen von elektrischer Leistung an eine Fahrzeugkomponente, (e) Bereitstellen von mindestens einem von (1) sichtbarer Rückmeldung, (2) akustischer Rückmeldung, (3) taktiler Rückmeldung, (4) haptischer Rückmeldung an den Fahrzeuginsassen.

6. Benutzerschnittstellensystem nach einem der Ansprüche 1 bis 5, wobei die Steuerung (105) ferner so konfiguriert ist, dass sie ein Steuersignal an mindestens einem von (a) einem Indikator, (b) einer Anzeige, (c) einem Klimasteuermodul, (d) einem Unterhaltungssteuermodul, (e) einem Sicherheitssteuermodul, (f) einer Motorsteuereinheit, (g) einem Datenspeicher, (h) einer Datenbank, (i) einem Motor, (j) einem Fahrzeugsitz, (k) einem Fensterheber sendet.

7. Benutzerschnittstellensystem nach einem der Ansprüche 1 bis 6, wobei die Steuerung (105) so konfiguriert ist, dass sie mindestens eines von (a) der Position der Eingabe, (b) der Intensität der Eingabe erfasst.

8. Benutzerschnittstellensystem nach einem der Ansprüche 1 bis 7, wobei die Schicht (48) zwischen der ersten und der zweiten nichtleitenden Schicht mindestens eines der folgenden Elemente aufweist: (a) ein komprimierbares Material, (b) Polyurethanschaum, (c) leitende Teilchen, (d) ein nichtleitendes komprimierbares Substrat mit einem leitenden Additiv, (e) Rußteilchen, die in einem nichtleitenden komprimierbaren Substrat eingestreut sind, (f) eine halbleitende Gelatine.

9. Benutzerschnittstellensystem nach einem der Ansprüche 1 bis 7, bei dem die Schicht (48) zwischen der ersten und der zweiten nichtleitenden Schicht einen kompressiblen Spalt aufweist, wobei der Spalt so konfiguriert ist, dass er verkleinert wird, wenn die Schicht (48) durch angewandten Druck komprimiert wird.

10. Benutzerschnittstellensystem nach einem der Ansprüche 1 bis 7, wobei die Schicht (48) zwischen der ersten und der zweiten nichtleitenden Schicht so konfiguriert ist, dass sie (a) einen Nominalbetrag des elektrischen Widerstands zwischen dem ersten Satz leitender Streifen (40) und dem zweiten Satz leitender Streifen (42) bereitstellt, wenn sich die Schicht (48) in einem nicht-komprimierten Zustand befindet, und (b) abnehmende Beträge des elektrischen Widerstands bereitstellt, wenn die Schicht (48) komprimiert wird.

11. Fahrzeugsteuersystem zum Empfangen von berührungsbasierten Eingaben zum Steuern eines oder mehrerer Fahrzeugsysteme oder -komponenten, wobei das Steuersystem ein Benutzerschnittstellensystem nach einem der Ansprüche 1 bis 10 umfasst, wobei die Steuerung (105) des Benutzerschnittstellensystems so betrieben werden kann, dass sie eine Benutzereingabe auf der Kontaktfläche identifiziert, indem sie den elektrischen Widerstand zwischen dem ersten und dem zweiten Satz leitender Streifen überwacht.

12. Fahrzeugsteuersystem nach Anspruch 11, das ferner einen Vibrationsgenerator umfasst, der mit der Schnittstelle gekoppelt ist und darauf anspricht, die Schnittstelle vibrieren zu lassen, wenn die Steuerung (105) feststellt, dass ein Druck über einem Schwellenbetätigungsdruck auf die Schnittstelle ausgeübt wurde.

13. Fahrzeugsteuersystem nach Anspruch 11 oder 12, ferner aufweisend ein Fahrzeugsteuermodul, das mit der Steuerung (105) gekoppelt ist, wobei die Steuerung (105) so konfiguriert ist, dass sie ein Steuersignal an das Fahrzeugsteuermodul sendet, um einen Ein/Aus-Zustand oder einen einstellbaren Parameter eines Fahrzeugsystems zu steuern, das durch das entsprechende Steuermodul gesteuert wird.

14. Fahrzeugsteuersystem nach einem der Ansprüche 11 bis 13, wobei die druckempfindliche Schnittstelle als Teil einer Armlehne, eines Dachhimmels, eines Armaturenbretts, einer Mittelkonsole, einer Türverkleidung, eines Lenkrads, eines Sitzes, eines Bodens oder einer Dachsäulenverkleidung konstruiert ist.

## Revendications

1. Système interface utilisateur pour l'intérieur d'un véhicule, ledit système interface utilisateur étant adapté pour recevoir des entrées à base tactile afin de commander un ou plusieurs systèmes ou composants du véhicule, et comprenant:
- une surface de contact;
- une première et une seconde couche non conductrice;
- une couche (48) entre la première et la seconde couche non conductrice;
- une grille détectrice comprenant un premier jeu de rubans conducteurs (40) entre la première couche non conductrice et la couche (48), et un second jeu de rubans conducteurs (42) entre la seconde couche non conductrice et la couche (48);
- un contrôleur (105);
dans lequel la grille détectrice est configurée pour présenter une résistance électrique variable en réponse à une pression appliquée;
dans lequel le contrôleur (105) est configuré pour détecter la résistance électrique de la grille détectrice en surveillant un signal électrique;
dans lequel la couche (48) entre la première et la seconde couche non conductrice est configurée pour présenter une résistance électrique variable en réponse à une compression; et
dans lequel la surface de contact comprend des indices identifiant des portions de la grille détectrice associées à des commandes correspondantes du véhicule.

2. Système interface utilisateur selon la revendication 1, dans lequel le signal électrique comprend une tension et dans lequel la couche (48) entre la première et la seconde couche non conductrice est configurée pour que sa résistance électrique diminue alors qu'elle est comprimée par une pression appliquée.

3. Système interface utilisateur selon la revendication 1 ou 2, dans lequel le premier et le second jeu de rubans conducteurs (40, 42) se chevauchent.

4. Système interface utilisateur selon la revendication 3, dans lequel une tension est appliquée au premier jeu de rubans conducteurs (40) et le contrôleur (105) est configuré pour surveiller la tension au niveau du second jeu de rubans conducteurs (42) là où le premier et le second jeu de rubans conducteurs (40, 42) se chevauchent.

5. Système interface utilisateur selon l'une des revendications 1 à 4, configuré pour être actionné par un occupant du véhicule, dans lequel le contrôleur (105) est en outre configuré pour au moins une action parmi :
(a) l'envoi d'un signal à un module de commande, (b) la commande d'un moteur, (c) la fourniture d'un signal à un composant du véhicule, (d) la fourniture de puissance électrique à un composant du véhicule, (e) la fourniture d'au moins une réaction parmi : (1) une réaction visible, (2) une réaction audible, (3) une réaction tactile, (4) une réaction haptique, à l'occupant du véhicule.

6. Système interface utilisateur selon l'une des revendications 1 à 5, dans lequel le contrôleur (105) est en outre configuré pour envoyer un signal de commande à au moins un élément parmi : (a) un indicateur, (b) un affichage, (c) un module de commande de climatisation, (d) un module de commande de divertissement, (e) un module de commande de sécurité, (f) une unité de commande moteur, (g) un stockage de données, (h) une banque de données, (i) une motrice, (j) un siège du véhicule, (k) un lève vitres.

7. Système interface utilisateur selon l'une des revendications 1 à 6, dans lequel le contrôleur (105) est configuré pour détecter au moins un paramètre parmi: (a) la localisation de l'entrée, (b) l'intensité de l'entrée.

8. Système interface utilisateur selon l'une des revendications 1 à 7, dans lequel la couche (48) entre la première et la seconde couche non conductrice comprend au moins un élément parmi: (a) un matériau compressible, (b) une mousse de polyuréthane, (c) des particules conductrices, (d) un substrat compressible non conducteur avec un additif conducteur, (e) des particules de noir de carbone dispersées à l'intérieur d'un substrat compressible non conducteur, (f) une gélatine semiconductrice.

9. Système interface utilisateur selon l'une des revendications 1 à 7, dans lequel la couche (48) entre la première et la seconde couche non conductrice comprend un intervalle compressible, ledit intervalle étant configuré pour être réduit quand la couche (48) est comprimée par une pression appliquée.

10. Système interface utilisateur selon l'une des revendications 1 à 7, dans lequel la couche (48) entre la première et la seconde couche non conductrice est configurée (a) pour présenter une valeur nominale de résistance électrique entre le premier jeu de rubans conducteurs (40) et le second jeu de rubans conducteurs (42) quand la couche (48) est dans un état non comprimé, et (b) pour présenter des valeurs décroissantes de résistance électrique lorsque la couche (48) est comprimée.

11. Système de commande de véhicule pour recevoir des entrées à base tactile afin de commander un ou plusieurs systèmes au composant d'un véhicule, le système de commande comprenant un système interface utilisateur selon l'une des revendications 1 à 10, dans lequel le contrôleur (105) du système interface utilisateur a pour fonction d'identifier une entrée de la part d'un utilisateur sur la surface de contact en surveillant la résistance électrique entre le premier et le second jeu de rubans conducteurs.

12. Système de commande de véhicule selon la revendication 11, comprenant en outre un générateur de vibrations couplé à l'interface et réagissant pour faire vibrer l'interface une fois que le contrôleur (105) a déterminé qu'une pression excédant une pression d'actionnement seuil a été appliquée à l'interface.

13. Système de commande de véhicule selon la revendication 11 ou 12, comprenant en outre un module de commande de véhicule couplé au contrôleur (105), le contrôleur (105) étant configuré pour envoyer un signal de commande au module de commande de véhicule afin de commander un état marche/arrêt ou un paramètre ajustable d'un système du véhicule commandé par le module de commande correspondant.

14. Système de commande de véhicule selon l'une des revendications 11 à 13, dans lequel l'interface de détection de pression est construite en tant que partie d'un accoudoir, d'un habillage de plafond, d'un tableau de bord, d'une console centrale, d'un panneau de porte, d'un volant de direction, d'un siège, d'un plancher, ou d'un habillage de montant de toiture.
